# FASCICULE DE BREVET EUROPEEN

(11) **EP 0 652 438 B1**
(45) Date de publication et mention de la délivrance du brevet: **29.12.1997**
(21) Numéro de dépôt: 94402326.6
(22) Date de dépôt: 18.10.1994
(51) Int. Cl.: G01P 3/44

(54) **Joint d'étanchéité pour roulements à capteur d'informations et roulement ainsi équipé**
Wasserdichte Abdichtung für Wälzlager mit Messaufnehmer und damit ausgerüstetes Wälzlager
Watertight sealing for roll bearing with measurement sensor and roll bearing provided with such a sealing

(30) Priorité: 04.11.1993 FR 9313112
(43) Date de publication de la demande: 10.05.1995
(73) Titulaire: SNR ROULEMENTS, F-74010 Annecy (FR)
(72) Inventeur: Hajzler, Christian, 74330 - Poisy (FR); Peilloud, Fernand, 74540 - Alby-sur-Cheran (FR)
(74) Mandataire: Ernst-Schonberg, Michel

(56) Documents cités:
- EP-A- 0 395 783
- FR-A- 2 574 501
- GB-A- 2 196 435

## Description

L'invention concerne un joint d'étanchéité et un roulement à capteur d'informations constitué par une bague fixe et une bague tournante qui possèdent des chemins de roulement pour des corps roulants et dans lequel la bague tournante porte un élément codeur monté à défilement devant un élément capteur d'informations porté par un joint d'étanchéité à armature intérieure, monté sur la bague fixe.

La publication FR-A-2574501 décrit un joint de roulement et un roulement dans lequel le dispositif capteur est constitué par une plaque support qui porte l'ensemble de connexion et de contact auquel sont raccordés le capteur et les broches d'alimentation.

Lorsque le dispositif capteur comporte une sonde de HALL, l'élément sensible de HALL possède une taille réduite et doit être protégé conjointement avec ses connexions par un boîtier qui augmente l'encombrement du dispositif.

Un tel boîtier ne peut être monté sur les roulements de petites dimensions.

Le montage d'une sonde de HALL devient de ce fait impossible sur des roulements dont le diamètre intérieur de la bague intérieure est inférieur à 20 mm et lorsque l'écartement radial entre les flancs respectifs de la bague fixe et de la bague tournante est insuffisant.

La publication FR-A-2655735 décrit un dispositif capteur constitué par un film souple circulaire qui porte un circuit conducteur. Un tel dispositif capteur doit être monté sur un roulement de diamètre déterminé.

On sait par ailleurs que la résolution du signal délivré par le dispositif est dépendante de l'agencement du circuit conducteur et par voie de conséquence de la dimension du roulement.

L'invention a donc pour objet un joint d'étanchéité du roulement dans lequel le capteur d'information est constitué par une sonde de HALL.

L'invention a également pour objet un roulement dont le capteur d'informations est protégé par la matière constitutive du joint d'étanchéité.

Selon l'invention l'élément capteur est au contact d'un film isolant porteur de pistes conductrices et de composants électroniques, montés conjointement sur l'armature du joint et recouverts par la matière constitutive du joint.

Le joint d'étanchéité ainsi réalisé, protège efficacement l'élément sensible du capteur et permet de simplifier son processus de fabrication par le fait que la protection et l'enrobage dudit élément sensible et des moyens de connexion peuvent être réalisés lors de la fabrication du joint d'étanchéité.

D'autres caractéristiques et avantages de l'invention apparaîtront à la lecture de la description d'exemples de réalisation du joint d'étanchéité en référence au dessin annexé dans lequel :
- la figure 1 représente une coupe partielle d'un roulement à billes équipé du joint d'étanchéité conforme à l'invention,
- la figure 2 représente une section radiale caractéristique du joint d'étanchéité illustrant l'implantation de l'élément capteur,
- la figure 3 représente une section radiale caractéristique du joint d'étanchéité illustrant l'implantation des moyens de câblage,
- la figure 4 représente la section d'une variante de réalisation des moyens de câblage,
- la figure 5 est une représentation perspective agrandie d'une partie de l'armature du joint d'étanchéité caractérisée par la section représentée à la figure 3 ou 4,
- les figures 6,7, 8 sont des représentations perspectives agrandies d'une partie de l'armature du joint d'étanchéité selon des variantes de réalisation.
- La figure 9 représente la section IX de l'armature illustrée par la figure 8,
- les figures 10 et 11 se rapportent à deux variantes de réalisation du joint d'étanchéité monté sur une armature limitée par un bord de connexion périphérique.

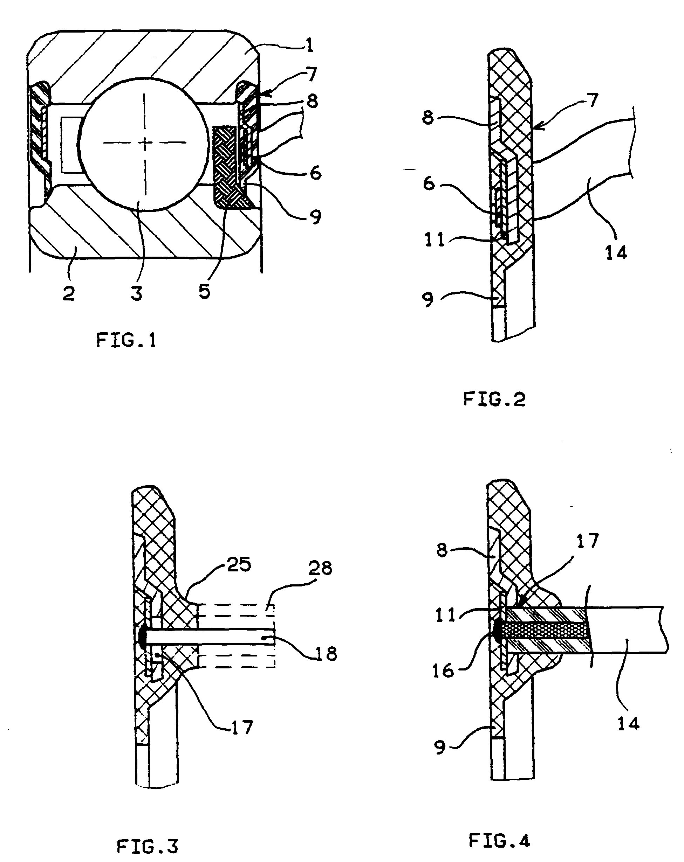

Le roulement à capteur d'information représenté à la figure 1 est constitué par une bague extérieure fixe 1 et une bague intérieure tournante 2 qui possèdent des chemins de roulement au contact de corps roulants 3. La bague tournante 2 porte un élément codeur constitué à titre d'exemple par un anneau multipolaire 5 monté à défilement devant un élément capteur d'informations 6 porté par un joint d'étanchéité 7 à armature interne 8. Le joint d'étanchéité 7 est porté par la bague fixe 1 et possède une lèvre d'étanchéité 9 au contact de l'anneau 5.

Selon l'invention, l'élément capteur 6 est au contact d'un film isolant 11 collé ou déposé sur une face de l'armature 8.

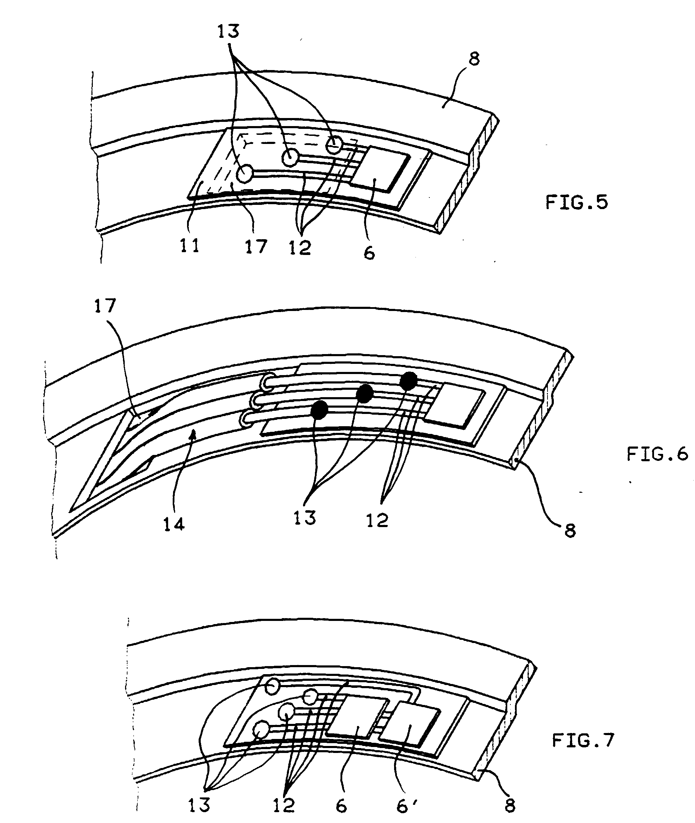

La figure 5 représente la partie de l'armature 8 sur laquelle est rapporté le film 11. La surface extérieure du film 11 porte des pistes conductrices 12 dont les extrémités sont respectivement raccordées à l'élément capteur 6, nu sans boîtier additionnel, constitué notamment par une sonde électronique à effet HALL et de composants électroniques, et à des bornes de connexion 13.

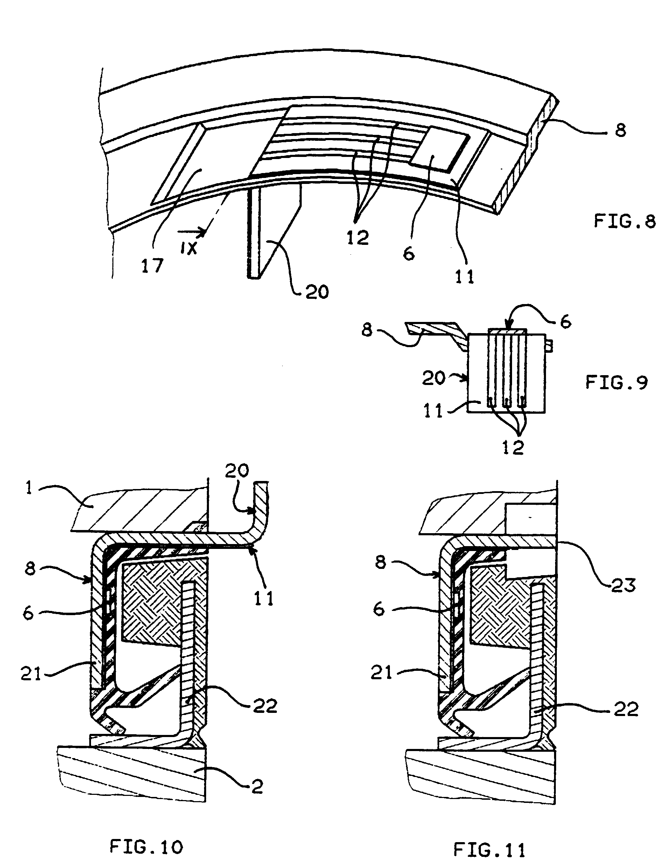

La figure 7 représente une variante de réalisation de l'armature 8 dans laquelle l'élément capteur est constitué par un ensemble de sondes 6, 6' individuellement raccordées par des pistes conductrices 12 aux bornes de connexion 13, afin d'augmenter la résolution du signal ou de donner des informations sur le sens de rotation.

Les bornes de connexion 13 permettent le branchement d'un câble d'alimentation 14. A cet effet l'armature 8 possède une fenêtre découpée 17 localisée à proximité du film isolant 11 qui permet la traversée de l'armature par le câble d'alimentation 14 et son branchement sur les bornes 13.

La figure 3 montre que la fenêtre 17 est traversée par des pions de connexion 18 destinés au branchement d'un connecteur ou de cosses regroupées à l'extrémité d'une gaine du câble 14.

Les pions de connexion 18 peuvent être nus ou enrobés localement par la matière constitutive du joint d'étanchéité sous la forme d'un manchon 28 ainsi que cela est représenté à la figure 3 en traits mixtes ou être raccordés par soudure au câble 14.

Lorsque le joint d'étanchéité possède des pions de connexion tels que 18 représentés à la figure 3, ceux-ci sont totalement protégés par un manchon latéral 28 porté par une face du joint et réalisé dans la matière constitutive du joint, ou partiellement protégés par un bossage 25 sur lequel peut prendre appui un connecteur.

La figure 4 montre que la fenêtre 17 est traversée par le câble 14 et que celui-ci est raccordé par des points de soudure 16 aux pistes conductrices 12. L'ensemble formé par l'armature 8, le film 11, le capteur 6, les pistes 12, le câble 14 et les points de soudure 16 est ensuite surmoulé par l'élastomère constitutif du joint d'étanchéité.

Selon l'exemple d'armature représenté à la figure 5 ou 7, la fenêtre 17 est recouverte par le film 11.

Selon l'exemple d'armature représenté à la figure 6, la fenêtre 17 est angulairement décalée par rapport au film 11.

Les figures 8 et 9 décrivent une variante de réalisation de l'armature 8 dans laquelle une extension axiale des pistes conductrices 12 est obtenue au niveau d'une languette 20 attenante au bord de la fenêtre 17.

La languette 20 est ici conformée à la découpe de la fenêtre et est recouverte par le film isolant 11 porteur des pistes 12. La languette 20 remplit de la sorte la fonction de moyen de connexion.

Les figures 10 et 11 décrivent des joints d'étanchéité dont l'armature 8 en deux parties possède une aile fixe 21 montée sur la bague 1 et localisée vers l'intérieur du roulement et une aile mobile 22 montée sur la bague 2 et localisée vers l'extérieur du roulement.

Le film 11 s'étend le long de l'armature 21 et d'une languette telle que 20 ou le long d'un bord 23 de ladite armature.

Le film 11 est recouvert conformément aux différents modes de réalisation de l'armature par la matière constitutive du joint mais ne s'étend pas le long du bord extérieur 23 ou de la languette 20 dans le but de faciliter le raccordement avec un câble.

Sans sortir du cadre de l'invention il est bien évident que l'élément capteur 6 peut-être formé par plus de deux composants électroniques de HALL, dans le but d'augmenter la résolution du signal. Des composants additionnels tels que des résistances ou des diodes permettent de compléter le traitement de ce signal.

## Revendications

1. Joint d'étanchéité pour roulement à capteur d'informations dans lequel une bague fixe (1) et une bague tournante (2) possèdent des chemins de roulement au contact de corps roulants (3) et dans lequel la bague tournante (2) porte un élément codeur (5) monté à défilement devant un élément capteur d'informations (6) porté par ledit joint d'étanchéité (7) à armature interne (8) monté sur la bague fixe (1) du roulement,, caractérisé par le fait que l'élément capteur (6) est au contact d'un film isolant (11) porteur de pistes conductrices (12) et de composants électroniques montés conjointement sur l'armature (8) et recouverts par la matière constitutive du joint.

2. Joint d'étanchéité selon la revendication 1, caractérisé par le fait que les pistes conductrices (12) sont connectées d'une part à au moins un élément de HALL nu et d'autre part par des bornes de raccordement (13) à un câble d'alimentation (14).

3. Joint d'étanchéité selon la revendication 2, caractérisé par le fait que l'armature (8) possède une fenêtre découpée (17) localisée à proximité du film isolant (11) pour assurer le passage de moyens de câblage et de connexion.

4. Joint d'étanchéité selon la revendication 3, caractérisé par le fait que le bord de la fenêtre (17) d'armature est attenant à une languette (20) conformée à la découpe de la fenêtre et recouverte par le film isolant (11) porteur des pistes conductrices (12).

5. Joint d'étanchéité selon la revendication 3, caractérisé par le fait que les moyens de connexion sont constitués par des pions (18) latéraux.

6. Joint d'étanchéité selon l'une quelconque des revendications 1 à 6, caractérisé par le fait que la matière constitutive du joint enrobe localement les moyens de câblage et de connexion (14, 18).

7. Joint d'étanchéité selon la revendication 6, caractérisé par le fait que l'une de ses faces porte un bossage latéral (25) de connexion.

8. Roulement à capteur d'informations, dans lequel une bague fixe (1) et une bague tournante (2) possèdent des chemins de roulement au contact de corps roulants (3) et dans lequel la bague tournante (2) porte un élément codeur (5) monté à défilement devant un élément capteur d'informations (6) porté par un joint d'étanchéité (7) à armature interne (8) monté sur la bague fixe (1) du roulement selon l'une quelconque des revendications 1 à 7.

## Patentansprüche

1. Dichtung für ein Wälzlager mit Messfühler, in dem ein feststehender Ring (1) und ein sich drehender Ring (2) Laufbahnen für Wälzkörper (3) aufweisen und in dem der sich drehende Ring (2) ein Kodierteil (5) trägt, das nichtstationär vor einem Messfühler (6) montiert ist, der in der Dichtung (7) mit innenliegender Platine (8) angeordnet ist, welche auf dem feststehenden Ring (1) des Wälzlagers montiert ist, dadurch gekennzeichnet, dass der Messfühler (6) mit einer isolierenden dünnen Schicht (11) in Kontakt steht, auf der Leiterbahnen (12) und elektronische Komponenten angeordnet sind, welche zusammen auf der Platine (8) montiert sind und durch das die Dichtung bildende Material abgedeckt sidn.

2. Dichtung gemäss Anspruch 1, dadurch gekennzeichnet, dass die Leiterbahnen (12) einerseits mit mindestens einem blanken HALL-Bauteil und andererseits durch Anschlussklemmen (13) mit einem Versorgungskabel (14) verbunden sind.

3. Dichtung gemäss Anspruch 2, dadurch gekennzeichnet, dass die Platine (8) ein ausgeschnittenes Fenster (17) aufweist, das in der Nähe der isolierenden dünnen Schicht (11) angeordnet ist, um die Durchführung der Verdrahtungs- und Anschlussanordnung zu ermöglichen.

4. Dichtung gemäss Anspruch 3, dadurch gekennzeichnet, dass an den Rand des Platinenfensters (17) eine Zunge (20) angrenzt, die an den Ausschnitt des Fensters angepasst ist und die mit der isolierenden dünnen Schicht (11), auf der Leiterbahnen (12) angeordnet sind, bedeckt ist.

5. Dichtung gemäss Anspruch 3, dadurch gekennzeichnet, dass die Anschlussanordnung aus seitlichen Stiften (18) besteht.

6. Dichtung gemäss einem der Ansprüche 1 bis 6, dadurch gekennzeichnet, dass das Material der Dichtung örtlich die Verdrahtungs- und Anschlussanordnung (14, 18) ummantelt.

7. Dichtung gemäss Anspruch 6, dadurch gekennzeichnet, dass auf einer ihrer Flächen eine seitliche Verbindungs-Erhöhung (25) angeordnet ist.

8. Wälzlager mit Messfühler, in dem ein feststehender Ring (1) und ein sich drehender Ring (2) Laufbahnen für Wälzkörper (3) aufweisen und in dem der sich drehende Ring (2) ein Kodierteil (5) trägt, das nichtstationär vor einem Messfühler (6) montiert ist, das in einer Dichtung (7) mit innenliegender Platine (8) angeordnet ist, die auf dem feststehenden Ring (1) des Wälzlagers gemäss einem der Ansprüche 1 bis 7 montiert ist.

## Claims

1. A sealing gasket for an information sensor bearing in which a fixed ring (1) and a rotary ring (2) comprise raceways in contact with rolling bodies (3) and in which the rotary ring (2) bears an encoding member (5) mounted to run in front of an information sensor member (6) borne by the sealing gasket (7) with an inner armature (8) mounted on the fixed ring (1) of the bearing, characterised in that the sensor member (6) is in contact with an insulating film (11) bearing conducting tracks (12) and electronic components mounted jointly on the armature (8) and covered by the material forming the gasket.

2. A sealing gasket as claimed in claim 1, characterised in that the conducting tracks (12) are connected, on the one hand, to at least one exposed Hall member and, on the other hand, via connection terminals (13), to a supply cable (14).

3. A sealing gasket as claimed in claim 2, characterised in that the armature (8) has a cut-out port (17) located in the vicinity of the insulating film (11) in order to enable the passage of cable and connection means.

4. A sealing gasket as claimed in claim 3, characterised in that the edge of the armature port (17) is adjacent to a tongue (20) formed by cutting out from the port and covered by the insulating film (11) bearing the conducting tracks (12).

5. A sealing gasket as claimed in claim 3, characterised in that the connection means are formed by lateral pins (18).

6. A sealing gasket as claimed in any one of claims 1 to 6, characterised in that the material forming the gasket locally coats the cable and connection means (14, 18).

7. A sealing gasket as claimed in claim 6, characterised in that one of its surfaces bears a lateral connection bushing (25).

8. An information sensor bearing, in which a fixed ring (1) and a rotary ring (2) comprise raceways in contact with rolling bodies (3) and in which the rotary ring (2) bears an encoding member (5) mounted to run in front of an information sensor member (6) borne by the sealing gasket (7) with an inner armature (8) mounted on the fixed ring (1) of the bearing, as claimed in any one of claims 1 to 7.
